# EUROPEAN PATENT APPLICATION

(11) **EP 2 003 723 A1**
(43) Date of publication of application: **17.12.2008**
(21) Application number: 07740461.4
(22) Date of filing: 23.03.2007
(51) Int. Cl.: H01M 10/04

(54) **STACKED CELL AND METHOD FOR MANUFACTURING SAME**

(30) Priority: 31.03.2006 JP 2006099092
(71) Applicant: Toyota Jidosha Kabushiki Kaisha, Toyota-shi, Aichi 471-8571 (JP)
(72) Inventor: KIMURA, Kenji, Toyota-shi, Aichi 471-8571 (JP)
(74) Representative: TBK-Patent
(86) International application number: PCT/JP2007/057023
(87) International publication number: WO 2007/114312

(57) **Abstract**

A stacked cell is provided with a plurality of unit cells (30) stacked in a prescribed direction, and a bundling member for bundling the unit cells (30) in a prescribed direction. The unit cell (30) includes a positive electrode collector foil (31) and a negative electrode collector foil (36) laid one over another in a prescribed direction, a cell element (35) arranged between the positive electrode collector foil (31) and the negative electrode collector foil (36), and an insulating resin (45) sandwiched between the positive electrode collector foil (31) and the negative electrode collector foil (36) and arranged around the cell element (35). The cell elements (35) are arranged on the positive electrode collector foil (31) and the negative electrode collector foil (36), respectively, and have a positive electrode active material layer (32) and a negative electrode active material layer (37) which face each other and an electrolyte material layer (41) between the positive electrode active material layer (32) and the negative electrode active material layer (37). The thickness of the unit cell (30) is less in a region (300) where the insulating resin (45) is included than in a region (200) where the cell element (35) is included. The stacked cell wherein a suitable surface pressure is operated to the cell element even in a case where the thickness of the cell element changes during cell recharge/discharge, and a method for manufacturing such stacked cell are provided.

## Description

### Technical Field

The present invention relates to a stacked type battery and a method of manufacturing the same.

### Background Art

As for a conventional stacked type battery, for example, Japanese Patent Laying-Open No. 2004-327374 discloses a bipolar battery which prevents occurrence of a short-circuit resulting from a gap formed between a unit cell layer and a seal member (Patent Document 1). In the bipolar battery disclosed in Patent Document 1, a unit cell layer formed of a positive electrode active material layer, a negative electrode active material layer and an electrolyte layer is arranged between a pair of charge collectors. A seal member for preventing liquid leakage from the unit cell layer is additionally disposed between a pair of charge collectors to surround the periphery of the unit cell layer.

In the stacked type battery as disclosed in the aforementioned Patent Document 1, a restraining member producing a restraining force in the stacked direction of each layer is provided to reduce resistance between each layer forming the battery. However, when the positive electrode and negative electrode active materials expand or shrink with charging/discharging of the battery, the thickness of the positive electrode and negative electrode active material layers changes. In this case, if the thickness of the unit cell layer becomes smaller than the distance between a pair of charge collectors defined by the seal member, an appropriate surface pressure cannot be exerted on the unit cell layer. Therefore, contact resistance or reaction resistance is likely to increase between each layer of the unit cell layer.

### Disclosure of the Invention

An object of the present invention is to solve the problems as described above and to provide a stacked type battery which allows an appropriate surface pressure to be exerted on a cell element even when the thickness of the cell element changes during charging/discharging, and a method of manufacturing the same.

A stacked type battery in accordance with the present invention includes a plurality of unit cells stacked in a prescribed direction and a restraining member restraining a plurality of unit cells in the prescribed direction. The unit cell includes a positive electrode collector and a negative electrode collector superimposed on each other in the prescribed direction, a cell element arranged between the positive electrode collector and the negative electrode collector, and an insulating member sandwiched between the positive electrode collector and the negative electrode collector and disposed on a periphery of the cell element. The cell element has a positive electrode active material layer and a negative electrode active material layer respectively provided to the positive electrode collector and the negative electrode collector and opposing each other, and an electrolyte layer interposed between the positive electrode active material layer and the negative electrode active material layer. The thickness of the unit cell in the prescribed direction is smaller at a position including the insulating member than at a position including the cell element.

According to the stacked type battery configured in this manner, the thickness of the unit cell at a position including the insulating member is set to be smaller than the thickness of the unit cell including the cell element. Therefore, even when the volume of the positive electrode active material layer and the negative electrode active material layer changes with charging/discharging and the thickness of the cell element is reduced, the thrusting state between the positive electrode collector and the negative electrode collector by the insulating member can effectively be avoided. Therefore, the restraining member that restrains a plurality of unit cells allows an appropriate surface pressure to be exerted on the cell element.

Preferably, the thickness of the unit cell at the position including the insulating member is smaller than a minimum value of the thickness of the unit cell at the position including the cell element, which changes as a result of a volume change of the cell element. According to the stacked type battery configured in this manner, the restraining member restraining a plurality of unit cells allows an appropriate surface pressure to be exerted on the cell element reliably.

Preferably, the thickness of the unit cell is almost constant in any position including the cell element. According to the stacked type battery configured in this manner, a void caused between a plurality of unit cells can be prevented in a position including the cell element. Therefore, an increase of resistance between a plurality of unit cells can be suppressed.

A method of manufacturing a stacked type battery in accordance with the present invention is a method of manufacturing any stacked type battery as described above. The method of manufacturing a stacked type battery includes the steps of: allowing the cell element to be sandwiched between the positive electrode collector and the negative electrode collector and applying an insulating material forming the insulating member on the positive electrode collector and the negative electrode collector; and superimposing the positive electrode collector and the negative electrode collector on each other to fabricate the unit cell. The step of fabricating the unit cell includes the step of curing the insulating material while the positive electrode collector and the negative electrode collector are pressurized in the prescribed direction at a position where the insulating material is applied.

According to the method of manufacturing the stacked type battery configured in this way, a unit cell having a thickness which is relatively large at a position including the cell unit and is relatively small at a position including the insulating member can be fabricated easily.

As described above, in accordance with the present invention, it is possible to provide a stacked type battery which allows an appropriate surface pressure to be exerted on a cell element even when the thickness of the cell element changes during charging/discharging, and a method of manufacturing the same.

### Brief Description of the Drawings

Fig. 1 is a cross-sectional view showing a stacked type battery in an embodiment of the present invention.
Fig. 2 is a cross-sectional view showing a detailed shape of a unit cell included in the stacked type battery in Fig. 1.
Fig. 3 is a cross-sectional view showing a state in which the unit cell in Fig. 2 is deformed during charging/discharging.
Fig. 4 is a cross-sectional view showing a first positive electrode formation step in a method of manufacturing the unit cell in Fig. 2.
Fig. 5 is a cross-sectional view showing a second positive electrode formation step in a method of manufacturing the unit cell in Fig. 2.
Fig. 6 is a cross-sectional view showing a first negative electrode formation step in a method of manufacturing the unit cell in Fig. 2.
Fig. 7 is a cross-sectional view showing a second negative electrode formation step in a method of manufacturing the unit cell in Fig. 2.
Fig. 8 is a cross-sectional view showing a layer stacking step in a method of manufacturing the unit cell in Fig. 2.
Fig. 9 is a cross-sectional view showing a cutting step in a method of manufacturing the unit cell in Fig. 2.
Fig. 10 is a perspective view showing a positive electrode collector foil obtained through the steps shown in Fig. 4 and Fig. 5.
Fig. 11 is a cross-sectional view showing a first modification of the unit cell in Fig. 2.
Fig. 12 is a cross-sectional view showing a second modification of the unit cell in Fig. 2.

### Best Modes for Carrying Out the Invention

An embodiment of the present invention will be described with reference to the figures. It is noted that, in the figures referred to below, the same or corresponding members will be denoted with the same numerals.

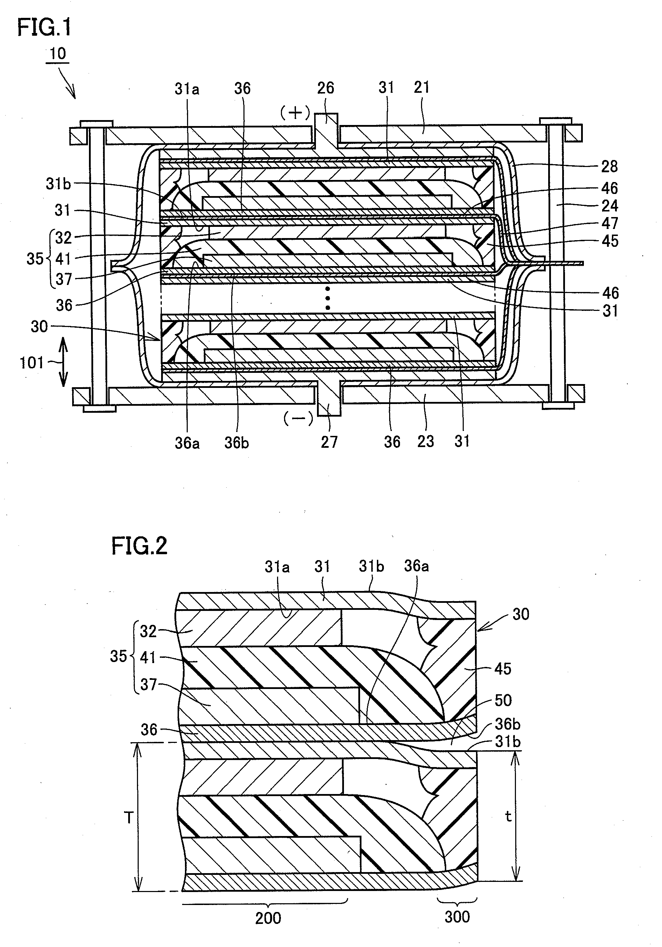

Fig. 1 is a cross-sectional view showing a stacked type battery in an embodiment of the present invention. Referring to Fig. 1, a stacked type battery 10 is mounted as a power source on a hybrid vehicle including an internal combustion engine such as a gasoline engine or a diesel engine and a rechargeable power supply as motive power sources. Stacked type battery 10 is formed of a lithium-ion battery.

Stacked type battery 10 includes a plurality of unit cells 30 stacked in the direction shown by arrow 101 and a bolt 24 restraining a plurality of unit cells 30. Stacked type battery 10 has an approximately rectangular parallelepiped shape. Stacked type battery 10 may have a thin-plate shape in which the length of the stacked direction of unit cells 30 is smaller than the length of the other side. A plurality of unit cells 30 are electrically connected in series. Stacked type battery 10 has, for example, a voltage of 200V or higher. Stacked type battery 10 includes, for example, 50 or more unit cells 30.

Each unit cell 30 has a sheet-like positive electrode collector foil 31 and negative electrode collector foil 36, and a cell element 35 arranged between positive electrode collector foil 31 and negative electrode collector foil 36. Cell element 35 is formed of a positive electrode active material layer 32 and a negative electrode active material layer 37 respectively provided to positive electrode collector foil 31 and negative electrode collector foil 36, and an electrolyte layer 41 provided between positive electrode active material layer 32 and negative electrode active material layer 37. Stacked type battery 10 in the present embodiment is a secondary battery in which positive electrode active material layer 32 and negative electrode active material layer 37 are separately provided to two collector foils.

Positive electrode collector foil 31 has a surface 31a and a surface 31b facing the opposite side thereof. Negative electrode collector foil 36 has a surface 36a and a surface 36b facing the opposite side thereof Positive electrode collector foil 31 and negative electrode collector foil 36 are superimposed on each other in the stacked direction of unit cells 30 shown by arrow 101 such that surface 31a and surface 36a face each other at a distance.

Positive electrode collector foils 31 of a plurality of unit cells 30 are all formed in the same shape. Negative electrode collector foils 36 of a plurality of unit cells 30 are all formed in the same shape. Positive electrode collector foil 31 is formed, for example, of aluminum. Negative electrode collector foil 36 is formed, for example, of copper.

Positive electrode active material layer 32 and negative electrode active material layer 37 are formed on surface 31a and surface 36a, respectively. Positive electrode active material layer 32 and negative electrode active material layer 37 oppose each other with electrolyte layer 41 interposed therebetween. Each layer forming unit cell 30 is in surface-contact at a position adjacent to one another in the plane orthogonal to the stacked direction of unit cells 30. Electrolyte layer 41 is provided to cover negative electrode active material layer 37. Electrolyte layer 41 may be provided to cover positive electrode active material layer 32.

Electrolyte layer 41 is a layer formed of a material exhibiting ion conductivity. Because of electrolyte layer 41 being interposed, ion conduction between positive electrode active material layer 32 and negative electrode active material layer 37 becomes smooth, and the output of stacked type battery 10 can be improved. In the present embodiment, electrolyte layer 41 is formed of a solid electrolyte material. Electrolyte layer 41 may be a gel-like electrolyte or a liquid electrolyte. In this case, electrolyte layer 41 is formed by a separator impregnated with electrolyte.

Unit cell 30 additionally has an insulating resin 45. Insulating resin 45 is provided along the edges of surfaces 31a and 36a between positive electrode collector foil 31 and negative electrode collector foil 36. Insulating resin 45 is disposed on the periphery of cell element 35. Insulating resin 45 is disposed to surround the periphery of cell element 35 over the entire circumference. Insulating resin 45 is provided at a position away from positive electrode active material layer 32 and negative electrode active material layer 37 on surfaces 31a and 36a. Insulating resin 45 is provided in contact with electrolyte layer 41. Cell element 35 is enclosed in a space between positive electrode collector foil 31 and negative electrode collector foil 36 by insulating resin 45.

Insulating resin 45 is formed of an insulating material and formed, for example, of epoxy resin, acrylic resin, silicone rubber or fluorine rubber. Insulating resin 45 is formed of an adhesive which shrinks during curing. The insulating material forming insulating resin 45 may be a thermoplastic resin or may be a thermosetting resin.

A plurality of unit cells 30 are stacked such that positive electrode collector foil 31 and negative electrode collector foil 36 adjoin each other between unit cells 30 adjacent to each other. A positive electrode terminal 26 is connected to positive electrode collector foil 31 arranged on one end of the stacked direction of unit cells 30. A negative electrode terminal 27 is connected to negative electrode collector foil 36 arranged on the other end of the stacked direction of unit cells 30.

A plurality of stacked unit cells 30 are covered with a lamination film 28 as a package. For example, a base material made of aluminum which is coated with poly ethylene terephthalate (PET) resin is used as lamination film 28. Lamination film 28 is provided to mainly prevent intrusion of moisture. Lamination film 28 may be eliminated depending on the kind of electrolyte layer 41 or the like.

On the opposite sides of a plurality of stacked unit cells 30, restraining plates 21 and 23 are disposed. Restraining plates 21 and 23 are coupled to each other by a bolt 24 extending in the stacked direction of unit cells 30. A plurality of bolts 24 are disposed on the periphery of a plurality of stacked unit cells 30. A plurality of unit cells 30 are restrained in their stacked direction by the axial force of bolt 24. Cell element 35 is pressurized by positive electrode collector foil 31 and negative electrode collector foil 36 in the stacked direction of unit cells 30.

Although bolt 24 is used as a restraining member which restrains a plurality of unit cells 30 in the present embodiment, the present invention is not limited thereto and the restraining member may be, for example, rubber, string, band, tape, or the like which produces a fastening force in the stacked direction of unit cells 30.

Between a plurality of unit cells 30 adjacent to each other, a sheet member 46 is disposed to be sandwiched between positive electrode collector foil 31 and negative electrode collector foil 36. Sheet member 46 has a cooling tab 47 projecting from between positive electrode collector foil 31 and negative electrode collector foil 36. Cooling tab 47 is drawn outside lamination film 28. Sheet member 46 is formed of a conductive material superior in heat conductivity. Sheet member 46 is formed, for example, of aluminum, copper or carbon sheet. Because of such a configuration, heat generated in unit cell 30 is transferred to cooling tab 47 of sheet member 46 to be efficiently dissipated to the outside of lamination film 28. It is noted that sheet member 46 is not necessarily provided.

Next, each member forming stacked type battery 10 in Fig. 1 will be described in detail. Positive electrode active material layer 32 includes a positive electrode active material and a solid polyelectrolyte material. Positive electrode active material layer 32 may include a supporting salt (lithium salt) for increasing ion conductivity, a conduction agent for increasing electron conductivity, NMP (N-methyl-2-pyrrolidone) serving as a solvent for adjusting slurry viscosity, AIBN (azobisisobutyronitrile) serving as a polymerization initiator, and the like.

As a positive electrode active material, a composite oxide of lithium and a transition metal can be used, which is generally used in a lithium-ion secondary battery. Examples of the positive electrode active material are a Li·Co-based composite oxide such as LiCoO₂, a Li·Ni-based composite oxide such as LiNiO₂, a Li·Mn-based composite oxide such as spinel LiMn₂O₄, a Li·Fe-based composite oxide such as LiFeO₂, and the like. The other examples may be a phosphate compound or sulfate compound of a transition metal and lithium such as LiFePO₄; a transition metal oxide or sulfide such as V₂O₅, MnO₂, TiS₂, MoS₂, or MoO₃; PbO₂, AgO, NiOOH, and the like.

The solid polyelectrolyte material is not particularly limited as long as it is polymer exhibiting ion conductivity and may be, for example, polyethylene oxide (PEO), polypropylene oxide (PPO), copolymer thereof, or the like. Such polyalkylene oxide-based polymer easily dissolves lithium salt such as LiBF₄, LiPF₆, LiN(SO₂CF₃)₂, LiN(SO₂C₂F₅)₂, or the like. The solid polyelectrolyte material is included in at least one of positive electrode active material layer 32 and negative electrode active material layer 37. More preferably, the solid polyelectrolyte material is included in both of positive electrode active material layer 32 and negative electrode active material layer 37.

As a supporting salt, Li(C₂F₅So₂)₂N, LiBF₄, LiPF₆, LiN(SO₂C₂F₅)₂, a mixture thereof, or the like may be used. As a conduction agent, acetylene black, carbon black graphite, or the like may be used.

Negative electrode active material layer 37 includes a negative electrode active material and a solid polyelectrolyte material. The negative electrode active material layer may include a supporting salt (lithium salt) for increasing ion conductivity, a conduction agent for increasing electron conductivity, NMP (N-methyl-2-pyrrolidone) serving as a solvent for adjusting slurry viscosity, AIBN (azobisisobutyronitrile) serving as a polymerization initiator, and the like.

As a negative electrode active material, a material generally used in a lithium-ion secondary battery can be used. Note that when a solid electrolyte material is used, a composite oxide of carbon or lithium and a metal oxide or a metal may be preferably used as a negative electrode active material. More preferably, the negative electrode active material is a composite oxide of carbon or lithium and a transition metal. Further preferably, the transition metal is titanium. In other words, the negative electrode active material is further preferably a composite oxide of titanium oxide or titanium and lithium.

As the solid electrolyte material forming electrolyte layer 41, for example, a solid polyelectrolyte material such as polyethylene oxide (PEO), polypropylene oxide (PPO), or copolymer thereof can be used. The solid electrolyte material includes a supporting salt (lithium salt) for ensuring ion conductivity. As a supporting salt, LiBF₄, LiPF₆, LiN(SO₂CF₃)₂, LiN(SO₂C₂F5)₂, a mixture thereof, or the like may be used.

Furthermore, specific examples of the materials forming positive electrode active material layer 32, negative electrode active material layer 37 and electrolyte layer 41 are shown in Table 1 to Table 3. Table 1 shows the specific examples in a case where electrolyte layer 41 is an organic solid electrolyte, Table 2 shows the specific examples in a case where electrolyte layer 41 is an inorganic solid electrolyte, and Table 3 shows the specific examples in a case where electrolyte layer 41 is a gel-like solid electrolyte.

**Table 1**

| positive electrode material | negative electrode material | solid electrolyte material | note |
|---|---|---|---|
| LiMn₂O₄ | Li metal | P(EO/MEEGE) | • electrolyte salt : LiBF₄ |
| - | Li metal | P(EO/PEG-22) | • electrolyte salt : LiN(CF₃SO₂)₂(LiTFSI) |
| LiCoO₂ | carbon | PVdF-based | - |
| LiCoO₂ | Li metal | ether-based polymer P(EO/EM/AGE) | • electrolyte salt : LiTFSI |
| | | | • ion conducting material binder : blend P(EO/EM)+LiBF₄ in positive electrode |
| Li_{0.33}MnO₂ | Li metal | P(EO/EM/AGE) | • electrolyte salt : LiTFSI |
| | | | • ion conducting material binder : blend PEO-based solid polymer +LiTFSI in positive electrode |
| Li_{0.33}MnO₂ | Li metal | PEO base+inorganic additive | • electrolyte salt : LiClO₄ |
| | | | • ion conducting material : blend KB+PEG+LiTFSI in positive electrode |
| - | - | PEG-PMMA+PEG-boric acid ester | • electrolyte salt : LiTFSI, BGBLi |
| - | - | PEO based+10 mass%0.6Li₂S+0.4SiS₂ | • electrolyte salt : LiCF₃SO₃ |
| - | Li metal | PEO based+perovskite La_{0.55}Li_{0.35}TiO₃ | • electrolyte salt : LiCF₃SO₃ |
| Li metal | - | styrene/ethylene oxide-block-graft polymer (PSEO) | • electrolyte salt : LiTFSI |
| | | | • ion conducting material : blend KB+PVdF+PEG+LiTFSI in positive electrode |
| LiCoO₂ | Li metal | P(DMS/EO)+polyether cross link | - |
| Li_{0.33}MnO₂ | Li metal | urethane acrylate-based prepolymer composite (PUA) | • electrolyte salt : LiTFSI |
| | | | • ion conducting material : blend KB+PVdF+PEG+LiTFSI in positive electrode |
| - | - | multi-branched graft polymer (MMA+CMA+POEM) | • electrolyte salt : LiClO₄ |
| LiNi_{0.8}Co_{0.2}O₂ | Li metal | PEO/high-branched polymer/filler-based composite solid electrolyte (PEO+HBP+BaTiO₃) | • electrolyte salt : LiTFSI |
| | | | • blend SPE+AB in positive electrode |
| - | - | PME400+Group 13 metal alkoxide (as Lewis acid) | • electrolyte salt : LiCl |
| - | - | matrix including poly(N-methyl vinyl imidazoline) (PNMVI) | • electrolyte salt : LiClO₄ |
| LlCoO₂ | Li metal | polymerize metoxypolyethyleneglycol monomethyl mesoacrylate using ruthenium complex by living radical polymeriazation. additionally polymerize with styrene | • electrolyte salt : LiClO₄ |
| | | | • positive electrode conducting agent KB+ binder PVdF |
| LiCoO₂ | Li metal | P(EO/EM)+ether-based plasticizer | • electrolyte salt : LiTFSI |
| | | | • positive electrode conducting agent KB+binder PVdF |

**Table 2**

| positive electrode material | negative electrode material | solid electrolyte material | note |
|---|---|---|---|
| LiCoO₂ | In | 95(0.6Li₂S·0.4SiS₂)·5Li₄SiO₄ (Li₂S-SiS₂-based melt-quenched glass) | • state : glass |
| - | - | 70Li₂S·30P₂S₅Li_{1.4}P_{0.6}S_{2.2} sulfide glass (Li₂S-P₂S₅-based glass ceramic) | • state : glass |
| | | | • production method : mechanochemial |
| - | - | Li_{0.35}La_{0.55}TiO₃(LLT) (perovskite structure) | • state : ceramic |
| | | | • produce porous solid electrolyte and fill pores with active material sol |
| - | - | 80Li₂S·20P₂S₅ (Li₂S-P₂S₅-based glass ceramic) | • state : glass |
| | | | • production method : mechanochemical |
| - | - | xSrTiO₃·(1-x)LiTaO₃ (perovskite oxide) | • state : ceramic |
| LiCoO₂ | Li-In metal | Li_{3.4}Si_{0.4}P_{0.6}S₄ (thio-LISICON Li ion conductor) | • state : ceramic |
| - | | - (Li_{0.1}La_{0.3})ₓZr_{y}Nb_{1-y}O₃ (perovskite oxide) | • state : ceramic |
| - | - | Li₄B₇O₁₂Cl | • state : ceramic |
| | | | • compose PEG as organic composite material |
| - | - | Li₄GeS₄-Li₃PS₄-based crystal Li_{3.25}Ge_{0.25}P_{0.75}S₄ (thio-LISICON Li ion conductor) | • state : ceramic |
| - | Li metal In metal | 0.01Li₃PO₄-0.63Li₂S-0.36SiS₂ (thio-LISICON Li ion conductor) | • state : ceramic |
| LiCoO₂LiFePO₄ LiMn_{0.6}Fe_{0.4}PO₄ | Li metal V₂O₅ | Li₃PO₄₋ₓNₓ(LIPON) (lithium phosphate oxynitride glass) | • state : glass |
| LiNi_{0.8}Co_{0.15} Al_{0.05}O₂ | Li metal | Li₃InBr₃Cl₃ (rock salt-type Li ion conductor) | • state : ceramic |
| - | - | 70Li₂S·(30-x)P₂S₅·xP₂O₅ (Li₂S-P₂S₅-P₂O₅-based glass ceramic) | • state : glass |
| LiCoO₂ or the like | Li metal Sn-based oxide | Li₂O-B₂O₃-P₂O₅-based, Li₂O-V₂O₅-SiO₂-based, Li₂O-TiO₂-P₂O₅ -based, LVSO, and the like | • state : glass |
| - | - | LiTi₂(PO₃)₄(LTP) (NASICON-type structure) | • state : ceramic |

**Table 3**

| positive electrode material | negative electrode material | polymer base material | note |
|---|---|---|---|
| Ni-based collector | Li metal | acrylonitrile-vinylacetate (PAN-VAc-based gel electrolyte) | • solvent : EC+PC |
| | | | • electrolyte salt : LiBF₄, LiPF₆, LiN(CF₃SO₂)₂ |
| lithium electrode | lithium electrode | triethylene glycol metyl methacrylate (polymethyl methacrylate (PMMA)-based gel electrolyte) | • solvent : EC+PC |
| | | | • electrolyte salt : LiBF₄ |
| V₂O₅/PPy Composite | Li metal | methyl methacrylate (PMMA gel electrolyte) | • solvent : EC+DEC |
| | | | • electrolyte salt : LiClO₄ |
| Li metal | Li metal | PEO/PS polymer blend gel electrolyte | • solvent : EC+PC |
| | | | • electrolyte salt : LiClO₄ |
| Li metal | Li metal | alkylene oxide-based polyelectrolyte | • solvent : PC |
| | | | • electrolyte salt : LiClO₄ |
| Li metal and LiCoO₂ | Li metal | alkylene oxide-based polyelectrolyte | • solvent : EC+GBL |
| | | | • electrolyte salt : LiBF₄ |
| Li metal | Li metal | polyolefin-based polymer | • solvent : EC+PC |
| | | | • electrolyte salt : LiBF₄ |
| Li_{0.36}CoO₂ | Li metal | poly vinylidene fluoride (PVdF)+propylene hexafluoride (HFP) (PVdF-HFP gel electrolyte) | • solvent : EC+DMC |
| | | | • electrolyte salt : LiN(CF₃SO₂)₂ |
| LiCoO₂ | Li metal | PEO-based and acrylic polymer | • solvent : EC+PC |
| | | | • electrolyte salt : LiBF₄ |
| Li metal | Li metal | trimethylol propane ethoxylate acrylate (ether-based polymer) | • solvent : PC |
| | | | • electrolyte salt : LiBETI, LiBF₄, LiPF₆ |
| - | - | EO-PO copolymer | • electrolyte salt : LiTFSI, LiBF₄, LiPF₆ |
| - | - | polyaziridine compound | • solvent : EC+DEC |
| | | | • electrolyte salt : LIPF₆ |
| - | PAS (polyacene) | PVdF-HFP gel electrolyte | • solvent : PC, EC+DEC |
| | | | • electrolyte salt : LiClO₄, Li(C₂F₅SO₂)₂N |
| - | - | urea-based lithium polymer gel electrolyte | • solvent : EC+DMC |
| | | | • electrolyte salt : LiPF₆ |
| - | - | polyether/polyurethane-based (PEO-NCO) gel electrolyte | • solvent : PC |
| | | | • electrolyte salt : LiClO₄ |
| - | - | cross-linked polyalkylene oxide-based gel polymer electrolyte | - |

Fig. 2 is a cross-sectional view showing a detailed shape of the unit cell included in the stacked type battery in Fig. 1. Unit cell 30 in the figure is depicted in a state in which sheet member 46 in Fig. 1 is not shown.

Referring to Fig. 2, in the plane orthogonal to the stacked direction of unit cells 30, a region 200 in which cell element 35 is disposed and a region 300 in which insulating resin 45 is disposed are defined. In region 200, three layers, namely, positive electrode active material layer 32, electrolyte layer 41 and negative electrode active material layer 37 are overlapped in the stacked direction of unit cells 30.

If the length of unit cell 30 between surface 31b and surface 36b along the stacked direction of unit cells 30 is called the thickness of unit cell 30, unit cell 30 is formed such that thickness t in region 300 is smaller than thickness T in region 200. Preferably, thickness T and thickness t of unit cell 30 satisfies the relation of t/T ≤ 0.9. Further preferably, thickness T and thickness t of unit cell 30 satisfies the relation oft/T ≤ 0.8. As an example, thickness T is 100 µm and thickness t is 80 µm.

Positive electrode collector foil 31 is minutely curved to approach negative electrode collector foil 36 as it extends from region 200 to region 300. Negative electrode collector foil 36 is minutely curved to approach positive electrode collector foil 31 as it extends from region 200 to region 300. Positive electrode collector foil 31 and negative electrode collector foil 36 are formed in such a shape that protrudes in the stacked direction of unit cells 30 in region 200 rather than in region 300. In the state in which a plurality of unit cells 30 are restrained in their stacked direction, in region 300, a gap 50 is formed between positive electrode collector foil 31 and negative electrode collector foil 36 of unit cells 30 adjacent to each other.

Unit cell 30 has a constant thickness T in region 200. In other words, in region 200, surface 31b and surface 36b extend parallel to each other in the plane orthogonal to the stacked direction of a plurality of unit cells 30. Because of such a configuration, positive electrode collector foil 31 and negative electrode collector foil 36 are in surface-contact with each other at a position provided with cell element 35, thereby preventing formation of a cavity therebetween.

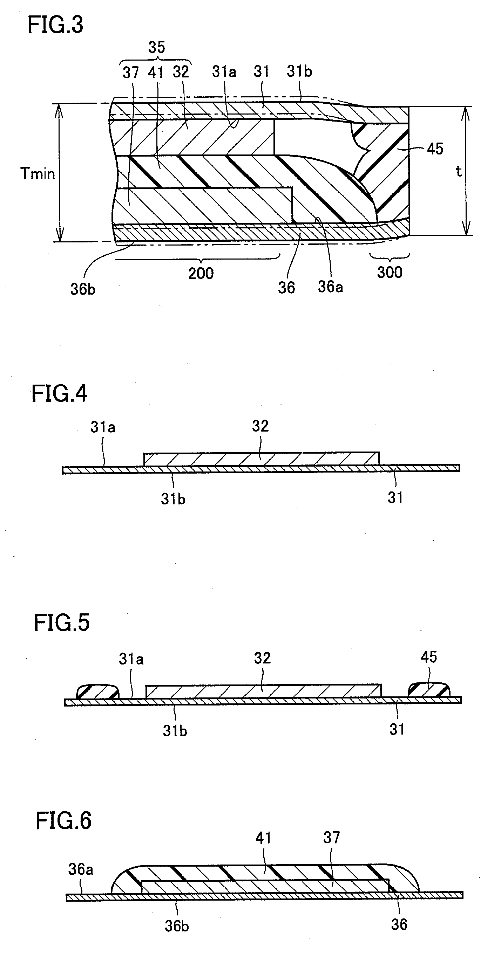

Fig. 3 is a cross-sectional view showing a state in which the unit cell in Fig. 2 is deformed. Referring to Fig. 2 and Fig. 3, in stacked type battery 10, the positive and negative electrode active materials in positive electrode active material layer 32 and negative electrode active material layer 37 expand or shrink with a charging/discharging reaction. Therefore, the volume of positive electrode active material layer 32 and negative electrode active material layer 37 changes, and in some cases, the thickness of cell element 35 may be reduced. In this case, insulating resin 45 causes a thrusting state between positive electrode collector foil 31 and negative electrode collector foil 36, so that it is likely that the restraining force by bolt 24 does not act on cell element 3 5 enough.

By contrast, in the present embodiment, thickness t of unit cell 30 in region 300 is set to be smaller than thickness T of unit cell 30 in region 200. Therefore, when thickness T of unit cell 30 in region 200 is reduced with the reducing thickness of cell element 35, positive electrode collector foil 31 and negative electrode collector foil 36 can be kept in such a shape that protrudes in region 200 rather than in region 300. In this case, the restraining force by bolt 24 can be exerted on cell element 35.

In addition, by properly controlling thickness t of unit cell 30 in region 300, thickness t can be set to be smaller than the minimum value Tₘᵢₙ of thickness T of unit cell 30 in region 200. In this case, irrespective of the state of charging/discharging of stacked type battery 10, the restraining force by bolt 24 can be exerted on cell element 35 reliably.

Next, a method of manufacturing unit cell 30 in Fig. 2 will be described. Fig. 4 to Fig. 9 are cross-sectional views showing the steps of the method of manufacturing the unit cell in Fig. 2. Referring to Fig. 4, through the deposition step such as sputtering, positive electrode active material layer 32 is formed on surface 31a of positive electrode collector foil 31. Referring to Fig. 5, insulating resin 45 is applied on surface 31 a to surround the periphery of positive electrode active material layer 32.

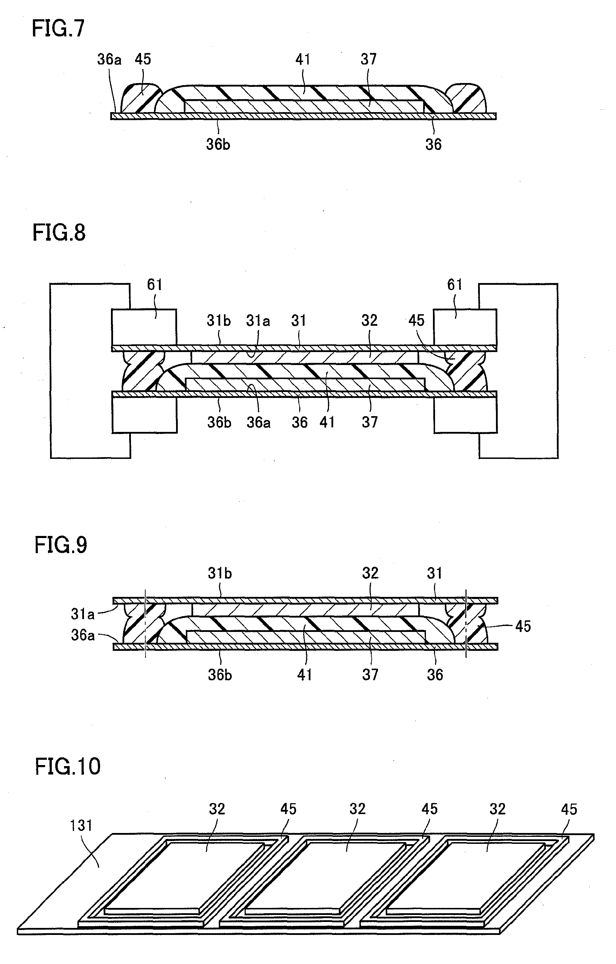

Referring to Fig. 6, similarly to the step shown in Fig. 4, negative electrode active material layer 37 is formed on surface 36a of negative electrode collector foil 36. In addition, electrolyte layer 41 is formed on surface 36a to cover negative electrode active material layer 37. Referring to Fig. 7, insulating resin 45 is applied on surface 36a to surround the periphery of negative electrode active material layer 37 and electrolyte layer 41.

Referring to Fig. 8, positive electrode collector foil 31 and negative electrode collector foil 36 are superimposed on each other so that insulating resins 45 respectively applied on positive electrode collector foil 31 and negative electrode collector foil 36 come into contact with each other. A press apparatus 61 is arranged such that positive electrode collector foil 31 and negative electrode collector foil 36 are sandwiched at the position provided with insulating resins 45. While positive electrode collector foil 31 and negative electrode collector foil 36 are pressurized by press apparatus 61 in the stacked direction of unit cells 30, insulating resin 45 is cured. Through this step, positive electrode collector foil 31 and negative electrode collector foil 36 are integrated.

Referring to Fig. 9, the edges of positive electrode collector foil 31 and negative electrode collector foil 36 are cut so that a cut surface is formed in insulating resin 45. Through the steps as described above, such unit cell 30 is completed in that thickness t of unit cell 30 in region 300 is smaller than thickness T of unit cell 30 in region 200.

Fig. 10 is a perspective view showing the positive electrode collector foil obtained through the steps shown in Fig. 4 and Fig. 5. Referring to Fig. 10, in the steps shown in Fig. 4 and Fig. 5, positive electrode active material layer 32 and insulating resin 45 may be formed in each of a plurality of places spaced apart from each other on one sheet of positive electrode collector foil 131. Similarly, in the steps shown in Fig. 6 and Fig. 7, negative electrode active material layer 37, electrolyte layer 41 and insulating resin 45 may be formed in each of a plurality of places spaced apart from each other on one sheet of negative electrode collector foil. Thereafter, the stacking step and the cutting step respectively shown in Fig. 8 and Fig. 9 are performed so that a plurality of unit cells 30 can be fabricated collectively.

Stacked type battery 10 in accordance with the embodiment of the present invention is a stacked type battery including a plurality of unit cells 30 stacked in a prescribed direction (direction shown by arrow 101 in Fig. 1) and bolt 24 as a restraining member which restrains a plurality of unit cells 30 in a prescribed direction.

Unit cell 30 includes positive electrode collector foil 31 and negative electrode collector foil 36 superimposed on each other in the prescribed direction, cell element 35 arranged between positive electrode collector foil 31 and negative electrode collector foil 36, and insulating resin 45 as an insulating member sandwiched between positive electrode collector foil 31 and negative electrode collector foil 36 and disposed on the periphery of cell element 35. Cell element 35 has positive electrode active material layer 32 and negative electrode active material layer 37 respectively provided to positive electrode collector foil 31 and negative electrode collector foil 36 and opposing each other, and electrolyte layer 41 interposed between positive electrode active material layer 32 and negative electrode active material layer 37. The thickness of unit cell 30 in the prescribed direction is smaller at region 300 as a position including insulating resin 45 than at region 200 as a position including cell element 35.

According to stacked type battery 10 in the embodiment of the present invention as configured in this manner, an increase of contact resistance or reaction resistance between each layer forming cell element 35 can be prevented by exerting the restraining force by bolt 24 on cell element 35 reliably.

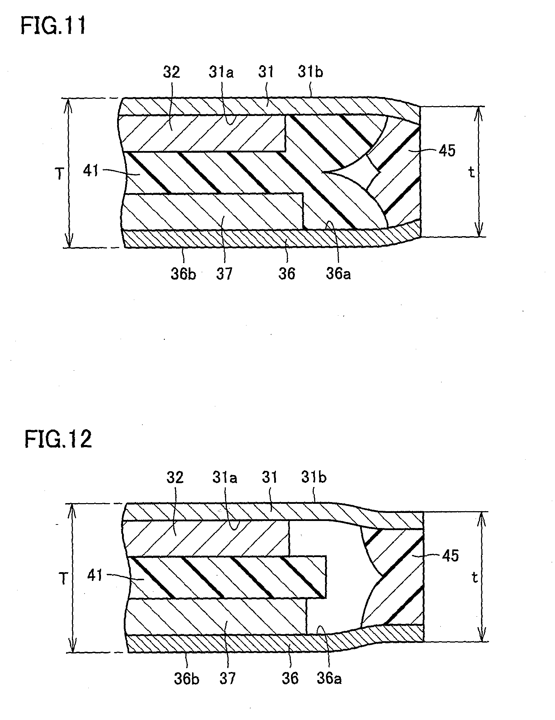

Fig. 11 is a cross-sectional view showing a first modification of the unit cell in Fig. 2. Referring to Fig. 11, in this modification, both positive electrode active material layer 32 and negative electrode active material layer 37 are covered with electrolyte layer 41. Fig. 12 is a cross-sectional view showing a second modification of the unit cell in Fig. 2. Referring to Fig. 12, in this modification, neither positive electrode active material layer 32 nor negative electrode active material layer 37 are covered with electrolyte layer 41. Also in the stacked type battery having these configurations, the effect as mentioned above can be achieved similarly.

Although, in the present embodiment, stacked type battery 10 formed of a lithium-ion battery has been described, by way of example, the present invention is not limited thereto and stacked type battery 10 may be formed of a secondary battery other than a lithium-ion battery.

Furthermore, stacked type battery 10 may be mounted on a Fuel Cell Hybrid Vehicle (FCHV) having a fuel cell and a secondary battery as driving sources or an Electric Vehicle (EV). In the hybrid vehicle in the present embodiment, an internal combustion engine is driven at an optimum fuel efficiency operation point, while in a fuel cell hybrid vehicle, a fuel cell is driven at an optimum electricity generation operation point. In addition, as for the use of a secondary battery, there is basically no difference between both hybrid vehicles.

It should be understood that the embodiment disclosed herein is illustrative rather than limitative in all respects. The scope of the present invention is shown not by the foregoing description but by the claims, and it is intended that equivalents to the claims and all modifications within the claims should be embraced.

### Industrial Applicability

The present invention is mainly applied to a power source of a hybrid vehicle having an internal combustion engine and a rechargeable power source as motive power sources.

## Claims

1. A stacked type battery comprising a plurality of unit cells (30) stacked in a prescribed direction and a restraining member (24) restraining a plurality of said unit cells (30) in said prescribed direction,
said unit cell (30) including
a positive electrode collector (31) and a negative electrode collector (36) superimposed on each other in said prescribed direction,
a cell element (35) arranged between said positive electrode collector (31) and said negative electrode collector (36), said cell element (35) having a positive electrode active material layer (32) and a negative electrode active material layer (37) respectively provided to said positive electrode collector (3 1) and said negative electrode collector (36) and opposing each other, and an electrolyte layer (41) interposed between said positive electrode active material layer (32) and said negative electrode active material layer (37), and
an insulating member (45) sandwiched between said positive electrode collector (31) and said negative electrode collector (36) and disposed on a periphery of said cell element (35),
a thickness of said unit cell (30) in said prescribed direction being smaller at a position (300) including said insulating member (45) than at a position (200) including said cell element (35).

2. The stacked type battery according to claim 1, wherein the thickness of said unit cell (30) at the position (300) including said insulating member (45) is smaller than a minimum value of the thickness of said unit cell (30) at the position (200) including said cell element (35), which changes as a result of a volume change of said cell element (35).

3. The stacked type battery according to claim 1, wherein the thickness of said unit cell (30) is almost constant in any position including said cell element (35).

4. A method of manufacturing the stacked type battery of claim 1, comprising the steps of:
allowing said cell element (35) to be sandwiched between said positive electrode collector (31) and said negative electrode collector (36) and applying an insulating material forming said insulating member (45) on said positive electrode collector (31) and said negative electrode collector (36); and
superimposing said positive electrode collector (3 1) and said negative electrode collector (36) on each other to fabricate said unit cell (30); wherein
said step of fabricating said unit cell (30) includes the step of curing said insulating material while said positive electrode collector (31) and said negative electrode collector (36) are pressurized in said prescribed direction at a position where said insulating material is applied.
